# EUROPÄISCHE PATENTSCHRIFT

(11) **EP 4 348 227 B1**
(45) Veröffentlichungstag und Bekanntmachung des Hinweises auf die Patenterteilung: **24.12.2025**
(21) Anmeldenummer: 22731600.7
(22) Anmeldetag: 01.06.2022
(51) Int. Cl.: G01N 21/88, G01N 21/95

(54) **VERFAHREN ZUM PRÜFEN VON BAUTEILOBERFLÄCHEN AUF FEHLER UND/ODER BESTIMMEN VON EIGENSCHAFTEN VON BAUTEILBESCHICHTUNGEN**
METHOD FOR CHECKING COMPONENT SURFACES FOR FAULTS AND/OR DETERMINING PROPERTIES OF COMPONENT COATINGS
PROCÉDÉ DE VÉRIFICATION DE DÉFAUTS DE SURFACES DE COMPOSANTS ET/OU DE DÉTERMINATION DE PROPRIÉTÉS DE REVÊTEMENTS DE COMPOSANTS

(30) Priorität: 03.06.2021 DE 102021205659
(43) Veröffentlichungstag der Anmeldung: 10.04.2024
(73) Patentinhaber: Fraunhofer-Gesellschaft zur Förderung der angewandten Forschung e.V., 80686 München (DE)
(72) Erfinder: PIERER, Alexander, 09126 Chemnitz (DE); DEMMLER, Matthias, 09126 Chemnitz (DE)
(74) Vertreter: Pfenning, Meinig & Partner mbB
(86) Internationale Anmeldenummer: PCT/EP2022/064932
(87) Internationale Veröffentlichungsnummer: WO 2022/253905

(56) Entgegenhaltungen:
- CN-A- 111 257 342
- JP-A- 2008 046 103
- JP-A- H0 210 250
- JP-A- S60 154 145

## Beschreibung

Die Erfindung betrifft Verfahren zum Prüfen von Bauteiloberflächen auf Fehler und/oder Bestimmen von Eigenschaften von Bauteilbeschichtungen. Dabei handelt es sich insbesondere um gekrümmte jeweilige Oberflächen mit dreidimensionaler Gestalt. Bei Beschichtungen sind insbesondere Lackierungen betroffen.

Die Erfindung betrifft dabei eine Inspektionsvorrichtung in einer definierten Ausrichtung und/oder einem Abstand relativ zur mindestens einem prüfenden Oberflächenbereich auf einer Oberfläche eines Bauteils, die in der Regel definiert in Bezug zu dieser Oberfläche ausgerichtet und positioniert sein sollte, um Fehler zu erkennen oder Eigenschaften bestimmen zu können.

Auftretende Oberflächenfehler stellen ein hohes technisches und ökonomisches Risiko für die Hersteller dar, wenn diese nicht frühzeitig und zuverlässig erkannt werden und ggf. entsprechende Fehlerteile aussortiert oder entsprechend nachgearbeitet werden. Besonders problematisch ist dieser Umstand u.a. bei beschichteten, insbesondere lackierten Bauteilen, bei denen Abweichungen der Schichtdicke, des Glanzgrades, des Farbtons, der Rauigkeit, der Textur vom Sollzustand oder Delaminationen häufige Fehlerbilder darstellen. Darüber hinaus stellen lokal begrenzte Defekte wie Risse, Blasen, Einschüsse, lokal ungleichmäßiger Schichtauftrag oder Fehler des beschichten Grundkörpers häufige Fehlertypen dar.

Für eine Inspektion von Oberflächen auf das Vorhandensein derartiger Fehler sind im Stand der Technik zahlreiche Systeme zu deren Erfassung bekannt. Viele dieser Systeme setzen eine exakte Ausrichtung des Sensorsystems hinsichtlich Abstand und Winkelausrichtung, beispielsweise mittig und lotrecht, relativ zum zu prüfenden Oberflächenbereich voraus.

Ein Beispiel für solch eine Prüfung stellt die Messung des Glanzgrades bzw. Reflexionsgrades von Lackierungen dar. Dabei wird gerichtetes Licht unter einem definierten Einfallswinkel auf die Probenoberfläche gestrahlt. Unter dem gleichen Ausfallswinkel erfasst ein Detektor die von der Probenoberfläche reflektierte Lichtstrahlung. Der Glanzgrad wird das Integral über der Reflexionsindikatrix der Prüfkörperoberfläche für einen durch die Aperturen von Beleuchtungs- und Detektoroptik bestimmten Raumwinkelbereich berechnet. Die Werte für die Winkelverhältnisse und die Charakteristik der Lichtquelle und der Empfangseinheit sind in mehreren Normen, u.a. in der ISO 2813, spezifiziert. Typisch sind die drei Winkel 20°, 60° und 85°. Ähnliche Anordnungen mit definierten Einfalls- und Ausfallswinkeln und Eigenschaften der Lichtquelle und Empfangseinheit sind für die Messung des Farbtons, der Farbsättigung und der Farbhelligkeit bekannt und normiert.

Ein weiteres typisches Bespiel sind die zerstörungsfreie Messung der Schichtstärke mit magnetisch-induktiven Verfahren für ferromagnetische Untergründe und Wirbelstromverfahren für Untergründe aus anderen Metallen. Dabei müssen die Sensorköpfe lotrecht mit der zu prüfenden Oberfläche in Kontakt gebracht werden.

All diese Verfahren bzw. verwandte Verfahren zur Prüfung von Beschichtungen und Oberflächen sehen eine exakte Einhaltung der Ausrichtung der Messvorrichtung in Bezug zur jeweiligen Oberfläche voraus. D.h. dass sich derartige Messungen meist auf ebene Oberflächen beschränken oder es muss bei gekrümmten Flächen, insbesondere an Abkantungen oder Freiformgeometrien der Prüfkopf manuell korrekt ausgerichtet werden, wobei eine Rückmeldung bzgl. der korrekten Ausrichtung fehlt und dies somit eine Fehlerquelle bei der Datenauswertung darstellt.

Für die automatisierte Prüfung kann bei bekannter Bauteilgeometrie und -lage eine entsprechende Positionierung des Prüfkopfes durch einen Roboter oder eine andere geeignete Kinematik erfolgen und ist beispielsweise bei der Streifenlichtinspektion in der Endkontrolle von Fahrzeugkarosserien etabliert. Aufgrund des dabei erforderlichen hohen Einrichtungsaufwands macht dies aus wirtschaftlichen Gesichtspunkten nur in der Serienfertigung bei entsprechend hohen Stückzahlen Sinn. Bei unbekannten oder stark toleranzbehafteten Bauteilen ist das Problem einer automatisierten Ausrichtung nicht gelöst oder setzt eine vorherige Geometrievermessung voraus.

So betrifft JP 2008046103 eine Vorrichtung zur Überprüfung von Oberflächen.

Aus JP S60 154145 A ist eine optische Überprüfungseinheit bekannt.

In CN 111257342 A ist ein System zur Bestimmung der Position und zur Positionierung einer Kamera offenbart.

JP H02 10250 A beinhalt Ausführungen zu einer Vorrichtung und einem Verfahren mit denen auf Möglichkeiten zur Überprüfung der Größe von Defekten an Oberflächen aufgezeigt werden.

Es ist daher Aufgabe der Erfindung, Möglichkeiten für eine definierte optische Bestimmung von Fehlern und/oder das Bestimmen von Eigenschaften von Bauteilbeschichtungen an Bauteilen in Einzelfertigung oder mit kleineren Stückzahlen mit handgeführten oder Manipulatoren (Roboter) geführten Prüfköpfen, bei denen auch die jeweilige Positionierung und Ausrichtung von Prüfkopf und jeweiliger Oberfläche in Bezug zueinander berücksichtigt oder korrigiert werden kann.

Erfindungsgemäß wird diese Aufgabe mit den im Anspruch 1 genannten Merkmalen gelöst. Vorteilhafte Ausgestaltungen und Weiterbildungen der Erfindung können mit in abhängigen Ansprüchen bezeichneten Merkmalen realisiert werden.

Bei dem erfindungsgemäßen Verfahren wird mit mindestens einer Projektionslichtquelle mindestens ein Muster bekannter Geometrie und Dimensionierung auf mindestens einen zu prüfenden Oberflächenbereich und/oder dessen Umgebung projiziert. Die Abbildung des Musters auf der jeweiligen Oberfläche wird dann mit mindestens einer optischen Detektoreinheit, insbesondere Kamera oder optischer Detektor, erfasst und anhand der erfassten Abbildung ein Vergleich mit der originalen Geometrie und Dimensionierung des Musters durchgeführt. Dabei wird mit entsprechend der Geometrie und/oder der Dimensionierung des Musters geeigneten mathematischen Beziehungen die Ausrichtung des Prüfkopfes mit der optischen Detektoreinheit in mindestens einem Raumwinkel in Bezug auf die jeweiligen Flächennormalen und/oder der Abstand des Prüfkopfes relativ zur zu prüfenden Oberflächenbereichen und/oder die Fluchtung der Messstelle des Prüfkopfes mit der gewünschten Position auf dem Bauteil ermittelt. Die so bestimmte Ausrichtung und/oder der Abstand des Prüfkopfes werden in Bezug zur jeweiligen Oberfläche korrigiert, wenn dies erforderlich ist. Falls eine Korrektur der Ausrichtung des Prüfkopfs und/oder dessen Abstand in Bezug zur jeweiligen Oberfläche erreicht worden oder nicht erforderlich ist, wird mit einer Auswertung weiterer Messwerte, die für die Bestimmung von Fehlern und/oder Fehler oder Eigenschaften auf Bauteiloberflächen oder von Bauteilbeschichtungen ausgewertet werden, durchgeführt. Weitere Messwerte können dabei jeweils für die Art der zu bestimmenden Fehler oder Eigenschaft erfasst werden. Bei der Glanzwertbestimmung kann dies beispielsweise, wie bereits erwähnt, die an der jeweiligen Oberfläche reflektierte Lichtstrahlung sein.

Mit dem mindestens einen Prüfkopf kann insbesondere der Glanzgrad, der Farbton und/oder die Beschichtungsdicke bestimmt werden.

Als Muster kann man mindestens zwei sich unter einem bekannten Winkel schneidende Lichtlinien, mindestens einen Kreis oder mindestens eine Ellipse, konzentrische Anordnungen aus diesen oder ein Punkt- und/oder Strichmuster mit bekannten Abständen zwischen Punkten oder Linien als Muster auf eine jeweilige Oberfläche projizieren.

Die Projektionslichtquelle und die Datenaufnahme der Detektoreinheit und/oder der Messvorgang des Prüfkopfes kann mit einer Steuereinheit in einer zeitlichen Abfolge ausgelöst oder zumindest teilweise synchronisiert aktiviert werden, wobei insbesondere eine impulsartige Kurzzeitaktivierung mit hohen Beleuchtungsstärken und kurzen Belichtungszeiten durchgeführt werden sollte, um Streu- oder Umgebungslichteinflüsse in ihrer Wirkung auf die eigentliche Korrekturbestimmung und die Bestimmung von Fehlern oder Eigenschaften zu reduzieren. Es kann dabei eine ein- oder mehrfach gepulste Bestrahlung und/oder Projektion eines Musters durchgeführt werden.

Die Ausrichtung, der Abstand und/oder die Fluchtung des mindestens einen Prüfkopfes kann in Bezug zur jeweiligen Oberfläche, auf der das mindestens eine Muster projiziert wird, durch Vermessen der Schnittwinkel, Linienlängen, Linienabständen, Lage der Schnittpunkte von projizierten Lichtlinien oder Punkten und /oder die Verkrümmung der Abbildung des jeweiligen Musters bestimmt und bei einer Korrektur der Ausrichtung und/oder der Abstand des Prüfkopfes in Bezug zur jeweiligen Oberfläche und/oder bei der Auswertung weiterer Messwerte, die für die Bestimmung von Fehlern und/oder Fehler oder Eigenschaften auf Bauteiloberflächen oder von Bauteilbeschichtungen ausgewertet werden, berücksichtigt werden.

Eine Korrektur der Position und Ausrichtung des mindestens einen Prüfkopfes in Bezug zur jeweiligen Oberfläche kann mittels einer Achskinematik, insbesondere einem Roboter durchgeführt werden. Dabei kann der Abstand und/oder Fluchtung der Messstelle des Prüfkopfes mit der gewünschten Position in die Steuerung der Achskinematik zurückgeführt werden, um eine zielgerichtete automatisierte Korrekturbewegung zu vollführen, um eine korrekte Ausrichtung und/oder einen korrekten Abstand des Prüfkopfes relativ zur Bauteiloberfläche zu erreichen.

Bei mindestens einem handgeführten Prüfkopf kann mittels der ermittelte Ausrichtung, der Abstand und/oder Fluchtung in Bezug zur jeweiligen Oberfläche einem Bediener angezeigt werden, in welche Richtung oder zu welcher Position der jeweilige Prüfkopf bewegt werden soll, um die korrekte, manuelle Ausrichtung des Prüfkopfes zu erleichtern und/oder das Erreichen eines Toleranzfensters um den gewünschten Sollabstand und/oder die -ausrichtung zu erreichen.

Während und/oder nach einem Umformen eines Bauteils kann die Bestimmung von Fehlern und/oder Fehler oder Eigenschaften auf Bauteiloberflächen oder von Bauteilbeschichtungen durchgeführt werden, um an den umgeformten Oberflächenbereichen des jeweiligen Bauteils Fehler und/oder spezifische Eigenschaften einer Beschichtung, eines Probenmaterials und/oder Fehler mit mindestens einem Prüfkopf bestimmen zu können.

Bei Bestimmungen von Messwerten und/oder Oberflächeneigenschaften, die nicht nahezu ideal punktuell, sondern in einem flächig ausgedehnten Bereich (einem sogenannten Messfleck), insbesondere, wenn dabei für einen Flächeninhalt integrierende oder mittelnde Messwertaufnahme zur Anwendung kommt, wird anhand der Auswertung der Verzeichnung des projizierten Musters auf einen idealisierten, effektiven ebenen Messfleck zurückgerechnet. Dazu wird die Krümmung der Oberfläche des Bauteils im oder beim Messfleck anhand der Verzeichnung des erfassten Musters ermittelt und auf die Verzeichnung, Flächeninhalt und/oder die Flächennormalenverteilung des Messflecks auf der gekrümmten Bauteiloberfläche geschlossen. Durch eine anschließende mathematische Projektion der von mindestens einem Prüfkopf ermittelten lokalen Messwertverteilung innerhalb des Messflecks in die Ebene des idealisierten, effektiven Messfleckes, kann auf die entsprechenden Effektivwerte der Messergebnisse geschlossen werden. Geeignete mathematische Verfahren können auf Basis einer Skalarproduktbildung der ermittelten Flächennormalenvektor-Schar mit dem Flächennormalenvektor des idealisierten Messfleckes erfolgen oder auf Verfahren aus dem Bereich der projektiven Geometrie oder affinen/homografischen Abbildungen basieren.

Nachfolgend soll die Erfindung beispielhaft näher erläutert werden.

Dabei zeigen:
- Fig. 1:: eine Prinzipdarstellung eines Messaufbaus mit dem das erfindungsgemäße Verfahren durchgeführt werden kann;
- Fig. 2:: beispielhaft einen Messaufbau bei dem ein Muster mittels Kreuzlinienprojektion auf eine Oberfläche eines Bauteils projiziert werden kann;
- Fig. 3:: eine Prinzipdarstellung des Abbildes eines kreuzförmigen Projektionsmusters auf der Oberfläche des zu prüfenden Bauteils unter zwei exemplarischen Ausrichtungen (durchgehende und gestrichelte Linie);
- Fig. 4:: eine Prinzipdarstellung des Abbildes eines kreuzförmigen Projektionsmusters auf der Oberfläche eines zu prüfenden Bauteils und der geometrisch-trigonometrischen Zusammenhänge unter zwei exemplarischen Ausrichtungen, wobei das durchgehend dargestellte Linienkreuz bei einer nicht-lotrechten Anordnung und das gestrichelte dargestellte Linienkreuz bei einer lotrechten Anordnung von der Detektoreinheit detektiert werden kann;

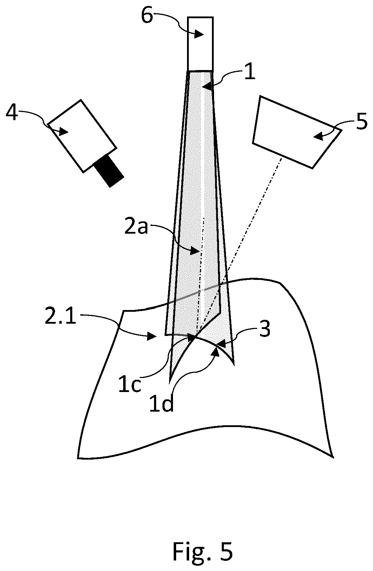

- Fig. 5:: Prinzipdarstellung des Abbildes eines kreuzförmigen Projektionsmusters auf einer stark gekrümmten Oberfläche eines zu prüfenden Bauteils mit Freiformgeometrie und

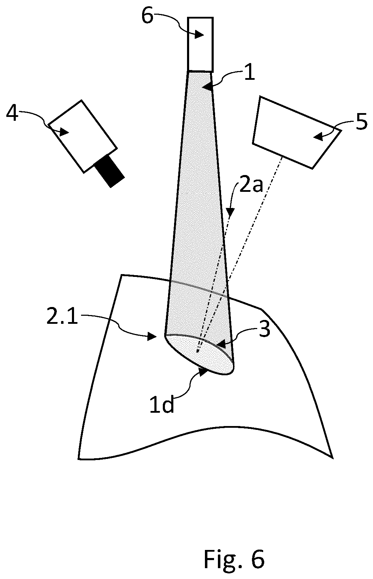

- Fig. 6:: eine Prinzipdarstellung des Abbildes eines in Kreisform projizierten Musters auf einer stark gekrümmten Oberfläche eines zu prüfenden Bauteils mit Freiformgeometrie, wodurch die Abbildung auf der Bauteiloberfläche verzerrt erscheint und der Flächenschwerpunkt dieser Abbildung nicht im Lot mit dem Flächenschwerpunkt des Musters angeordnet ist.

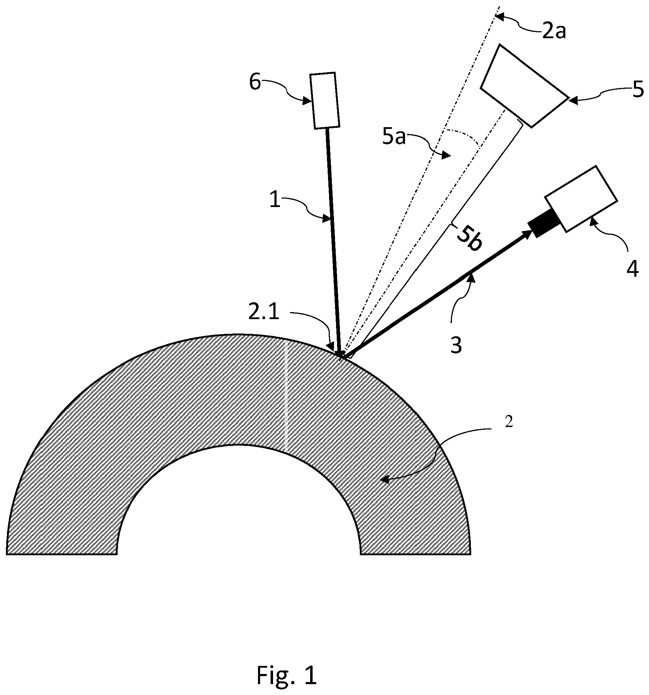

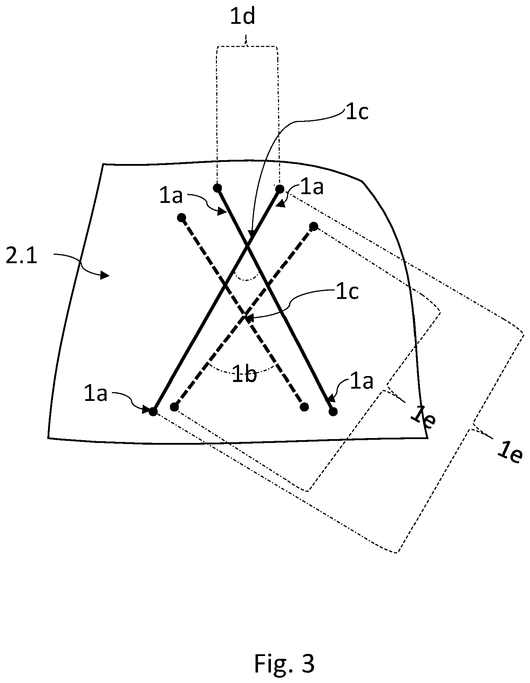

In Figur 1 ist beispielhaft gezeigt, wie ein Muster 1 bekannter Geometrie und Dimensionierung auf den zu prüfenden Oberflächenbereich 2.1 eines Bauteils 2 und/oder dessen Umgebung mit einer Projektionslichtquelle 6 projiziert und dessen Abbildung 3 mit mindestens einer Detektoreinheit 4, insbesondere Kamera oder optischem Detektor, erfasst werden kann. Anhand dessen wie diese Abbildung 3 im Vergleich zur originalen Geometrie und Dimensionierung des Musters 1 mit der Detektoreinheit 4 erfasst wird, kann die Ausrichtung in Bezug zu den jeweiligen Flächennormalen/Lotrechten 2a und der Abstand 5b des Prüfkopfes (5) relativ zur zu prüfenden Oberfläche 2 ermittelt werden. Anhand dieser Auswertung können Kennwerte für die Ausrichtung 5a und/oder den Abstand 5b des Prüfkopfes 5 relativ zur Oberfläche des Oberflächenbereichs 2.1 ermittelt werden. Diese Kennwerte können zum Beispiel direkt in Messwerte für die Winkelausrichtung 5a und den metrischen Abstand 5b zur Oberfläche 2.1 abgeleitet werden. Eine alternative Möglichkeit liefert keine direkten Messwerte für die Ausrichtungswinkel 5a und Abstand 5b, sondern eine Abstandsmetrik der erfassten Abbildung 3 des Musters 1 in der aktuellen Ist-Position im Vergleich zum theoretischen Erscheinungsbild des Musters 1 in der Sollposition, zum Beispiel bei mittiger und lotrechten Ausrichtung zum zu prüfenden Oberflächenbereich 2.1. Dabei ist es insbesondere vorteilhaft für diese Abstandmetrik ein Toleranzfenster für den Sollbereich zu definieren und ein Korrekturmaß zu errechnen, um zumindest die Richtung einer Lagekorrektur des Prüfkopfes 5 zu generieren, um diesen sukzessive in Einklang mit der Sollposition und Ausrichtung zu bringen. Derartige Korrekturmaße und Kennwerte können über eine Anzeigeeinheit dem Bediener angezeigt werden, um die korrekte, manuelle Ausrichtung des Prüfkopfes 5 zu erleichtern. In einer weiteren erfindungsgemäßen Ausgestaltung werden die Kennwerte in die Steuerung einer Kinematik, insbesondere einem Roboter zurückgeführt, um eine zielgerichtete automatisierte Korrekturbewegung zu vollführen, um eine korrekte Ausrichtung des Prüfkopfes 5 zu erreichen.

Ein Prüfkopf 5 ist ausgebildet Fehler und/oder Eigenschaften an der Oberfläche 2.1 des jeweiligen Bauteils 1 detektieren zu können, dazu ist die Kenntnis seiner Position und Ausrichtung in Bezug zur Oberfläche 2.1 erforderlich. Die Position und Ausrichtung kann mittels der Erfindung so beeinflusst werden, dass sie sich zumindest innerhalb eines Toleranzbereichs befinden oder ein Prüfkopf 5 an eine solche Position mit entsprechender Winkelausrichtung 5a bewegt werden kann.

In einer Ausgestaltung der Erfindung wird ein einfaches Muster 1 bestehend aus mindestens zwei sich unter einem bekannten Winkel schneidenden Lichtlinien 1a, z.B. durch Kreuzlinienlaser oder Gitterprojektoren auf die Oberfläche projiziert. Die Ausrichtung 5a, der Abstand 5b und/oder der Fluchtung der Messstelle des Prüfkopfes 5 mit der gewünschten Position auf der Oberfläche 2.1 kann dann sehr vorteilhaft durch Vermessen der Schnittwinkel 1b, Lage der Schnittpunkte 1c, von Abständen 1d zwischen Elementen des Musters (1), Linienlängen 1e, und /oder der Verkrümmung des Musters 1 ermittelt werden, wie man dies in Figur 3 erkennen kann.

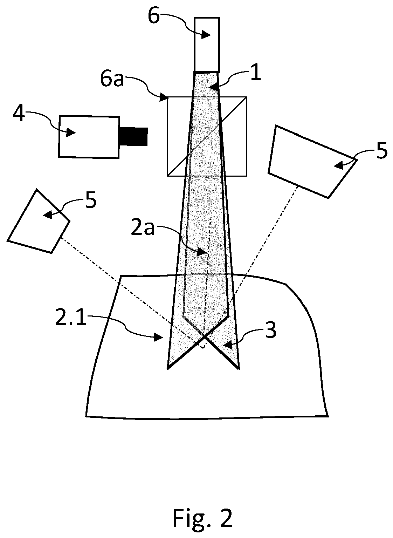

In Fig. 2 wird dies anhand eines einfachen Beispiels unter Verwendung eines Kreuzlinienlasers als Projektionslichtquelle 6 veranschaulicht, wobei die Musterprojektion und die Detektion der Abbildung 3 des Musters 1 koaxial erfolgt. Dabei ist es denkbar, dass bei sehr großen Schrägstellungen die Schnittpunkte 1c außerhalb des Detektionsbereichs der Detektoreinheit 4 abgebildet werden und durch Extrapolation mathematisch rekonstruiert werden müssen.

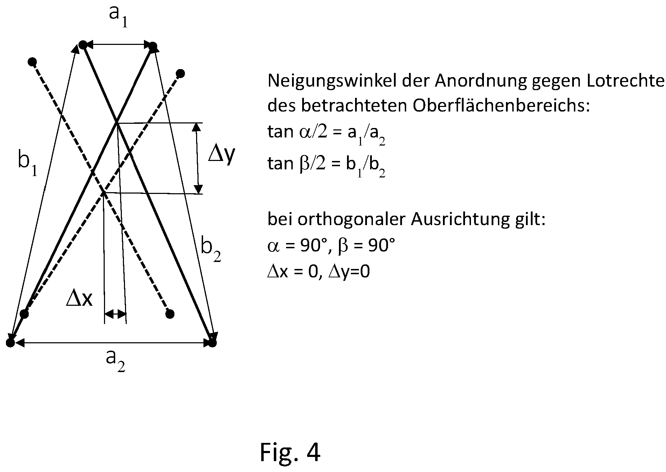

In Fig. 4 sind für dieses einfache Beispiel einer Kreuzlinienprojektion die geometrischen Verhältnisse zwischen einer in zwei Raumrichtungen α und β verkippten bzw. nicht zentrisch (Verschiebung Δx und Δy) ausgerichteten Prüfkopfanordnung in Bezug auf eine lotrechte Anordnung, die für zahlreiche Messaufgaben besonders vorteilhaft ist, veranschaulicht. In diesem Bespiel führt eine Verkippung zu einer Verkürzung und Dehnung von Abständen (zum Beispiel die in Fig. 4 dargestellten Abstände a₁, a₂, b₁, b₂) innerhalb des von der Detektoreinheit 4 wahrgenommenen projizierten Musters 1. Weiterhin können die Verschiebungen der Schnittwinkel von sich kreuzenden Linien des Musters 1 mit in die Auswertung einbezogen werden. Anhand der in Fig. 4 auf geführten trigonometrischen Formeln ist eine Berechnung der Neigungswinkel α und β gegenüber einer lotrechten Anordnung möglich. Die laterale Verschiebung Δx und Δy gegenüber der Lotrechten kann durch Vermessung der Schnittpunktlage berechnet werden. Bei einer lotrechten zentrisch ausgerichteten Anordnung wären in diesem Beispiel a₁ und a₂ sowie b₁ und b₂ jeweils paarweise gleich und der Schnittpunkt des kreuzförmigen Musters 1 würde in der Bildmitte der Detekoreinheit 4 positioniert worden sein. Für andere Formen von Mustern 1 und/oder nicht-koaxiale Anordnungen von projizierten Mustern 1 und deren Detektion können ähnliche geometrische und trigonometrische Beziehungen zur Berechnung der Verkippung α und β und Verschiebung Δx und Δy aufgestellt bzw. um entsprechende Korrekturterme ergänzt werden.

Ebenso sind Muster 1, die mit mindestens einem Kreis oder Ellipsen und konzentrische Anordnungen aus diesen vorteilhaft einsetzbar. Die Ausrichtung kann durch Auswertung der sich auf der Oberfläche 2.1 abbildenden Muster 1 ermittelt werden, indem deren Flächenschwerpunkt sowie deren Kreisformabweichung beziehungsweise Exzentrizität vermessen und mit dem vorgegebenen originalen Muster 1 verglichen wird. Eine weitere vorteilhafte Ausgestaltung sieht ein mit Punkten gebildetes Muster 1 in Form eines Rasters mit bekannten Punkt-zu-Punkt-Abständen vor. Anstelle von Punkten kann man auch Linien mit bekannten Längen und Abstand zwischen den Linien als ein geeignetes Muster nutzen. Es können auch Strich-Punktmuster genutzt werden.

Für die Projektionslichtquelle 6 bestehen keine Einschränkungen hinsichtlich spektraler Zusammensetzung der Lichtstrahlung, insbesondere können auch Wellenlängen außerhalb des sichtbaren Bereichs anwendungsspezifisch sehr vorteilhaft sein. Laserlichtquellen sind dabei aufgrund der geringen Divergenz des emittierten Lichts für diesen Zweck besonders vorteilhaft. Weiterhin können die Projektionslichtquelle 6 und die Datenaufnahme der Detektoreinheit 4 und/oder der Messvorgang des Prüfkopfes 5 durch eine nicht dargestellte elektronische Steuereinheit in einer zeitlichen Abfolge oder zumindest teilweise synchronisiert betrieben bzw. aktiviert werden. Insbesondere ist dabei eine impulsartige Kurzzeitaktivierung mit hohen Beleuchtungsstärken und kurzen Belichtungszeiten sehr vorteilhaft, um Störeffekte durch Umgebungslicht und Bewegungsunschärfe zu reduzieren. In einer weiteren Ausgestaltung kann es vorteilhaft sein, einen Strahlteiler 6a zu nutzen, um das Muster 1 koaxial zur Detektionsrichtung der Detektoreinheit 4 auf die Oberfläche 2.1 des Bauteils zu projizieren, wie es in Figur 2 gezeigt ist.

Ein weiteres Anwendungsgebiet der Erfindung stellt die Charakterisierung und Inspektion von Bauteilen 2 oder Probekörpern im Zusammenhang mit ein- oder mehrachsigen Umformungen, insbesondere Tiefungs- oder Wölbungsversuchen, wie beispielsweise dem Erichsen-Tiefungsversuch dar. Dabei wird eine Probe bzw. ein Bauteil 2 mit einem Niederhalter gespannt und durch ein Wirkmedium, Versuchswerkzeug oder einen Eindringkörper verformt. Von besonderen Interesse ist es dabei, wie sich Oberflächeneigenschaften oder Beschichtungen in Abhängigkeit der Verformung verhalten. Dabei ist im umgeformten Bereich die korrekte Ausrichtung und/oder Abstand des Prüfkopfes 5 in Bezug zur jeweiligen Oberfläche 2.1 von besonderer Bedeutung und kann mit der Erfindung vorteilhaft berücksichtigt werden.

Eine Ausgestaltung der Erfindung bezieht sich auf Messprinzipien des Prüfkopfes 5, die nicht nahezu ideal punktuell, sondern in einem flächig ausgedehnten Bereich (einem sogenannten Messfleck) mindestens einen Messwert erfassen. Dies ist insbesondere dann der Fall, wenn dabei für einen Flächeninhalt eine integrierende oder mittelnde Messwertaufnahme zur Anwendung kommt. Dabei wird die Krümmung der Oberfläche 2.1 des Bauteils 2 im oder beim Messfleck anhand der Verzeichnung des erfassten Musters 1 ermittelt und auf die Verzeichnung, Flächeninhalt und/oder dessen Flächennormalenverteilung des effektiven Messflecks zurückgerechnet. Dadurch wird eine mathematische Korrektur des Messergebnisses auf einen effektiven, ebenen Messfleck möglich. So kann beispielsweise bei der Glanzgradmessung die Minderung der Reflexionsstrahlintensität infolge der Radiusabweichung über die gekrümmte Fläche am Messpunkt mathematisch auf ihren äquivalenten Effektivwert an einer ebenen Probenoberfläche korrigiert werden.

## Patentansprüche

1. Verfahren zum Prüfen von Bauteiloberflächen auf Fehler und/oder Bestimmen von Eigenschaften von Bauteilbeschichtungen, insbesondere Lackierungen, mit mindestens einem Prüfkopf (5), bei dem mit mindestens einer Projektionslichtquelle (6) mindestens ein Muster (1) bekannter Geometrie und Dimensionierung auf mindestens einer zu prüfenden Oberfläche (2.1) und/oder dessen Umgebung projiziert und die Abbildung (3) des Musters (1) auf der jeweiligen Oberfläche mit mindestens einer optischen Detektoreinheit (4) erfasst und anhand der erfassten Abbildung (3) ein Vergleich mit der originalen Geometrie und Dimensionierung des Musters (1) durchgeführt und dabei mit entsprechend der Geometrie und/oder der Dimensionierung des Musters (1) geeigneten mathematischen Beziehungen die Ausrichtung (5a) des Prüfkopfes (5) mit der optischen Detektoreinheit (4) in mindestens einem Raumwinkel in Bezug auf den jeweiligen Flächennormalen (2a) und/oder der Abstand (5b) des Prüfkopfes (5) relativ zur zu prüfenden Oberfläche (2.1) und/oder die Fluchtung der Messstelle des Prüfkopfes (5) mit der gewünschten Position auf dem Bauteil (2) ermittelt und/oder die so bestimmte Ausrichtung (5a) und/oder der Abstand (5b) des Prüfkopfes (5) in Bezug zur jeweiligen Oberfläche korrigiert oder bei der Auswertung weiterer Messwerte, die für die Bestimmung von Fehlern und/oder Fehler oder Eigenschaften auf Bauteiloberflächen oder von Bauteilbeschichtungen ausgewertet werden, berücksichtigt wird/werden und
zu einer Messwertkorrektur für Messprinzipien des Prüfkopfes (5), die nicht nahezu ideal punktuell, sondern in einem flächig ausgedehnten Bereich als Messfleck, insbesondere durch für einen Flächeninhalt integrierende oder mittelnde Messwertaufnahme, mindestens einen Messwert erfassen, die Krümmung der jeweiligen Oberfläche (2.1) des Bauteils (2) im oder beim Messfleck anhand der Verzeichnung des erfassten auf die jeweilige Oberfläche (2.1) projizierten Musters (1) ermittelt wird und auf die Verzeichnung, Flächeninhalt und/oder dessen Flächennormalenverteilung des effektiven Messflecks zurückgerechnet werden, um eine mathematische Korrektur des Messergebnisses auf einen effektiven, ebenen Messfleck vorzunehmen.

2. Verfahren nach Anspruch 1, **gekennzeichnet dadurch, dass** mit dem mindestens einen Prüfkopf (5) der Glanzgrad, der Farbton und/oder die Beschichtungsdicke bestimmt wird.

3. Verfahren nach mindestens einem der vorhergehenden Ansprüche, **gekennzeichnet dadurch, dass** als Muster (1) mindestens zwei sich unter einem bekannten Winkel schneidende Lichtlinien, mindestens ein Kreis oder mindestens eine Ellipse, konzentrische Anordnungen aus diesen oder ein Punkt- oder Strichmuster mit bekannten Abständen zwischen Punkten und/oder Linien als Muster (1) auf eine jeweilige Oberfläche projiziert wird.

4. Verfahren nach mindestens einem der vorhergehenden Ansprüche, **gekennzeichnet dadurch, dass** die Projektionslichtquelle (6) und die Datenaufnahme der Detektoreinheit (4) und/oder Messvorgang des Prüfkopfes (5) mit einer Steuereinheit in einer zeitlichen Abfolge ausgelöst oder zumindest teilweise synchronisiert aktiviert werden, wobei insbesondere eine impulsartige Kurzzeitaktivierung mit hohen Beleuchtungsstärken und kurzen Belichtungszeiten durchgeführt wird.

5. Verfahren nach einem der vorhergehenden Ansprüche, **dadurch gekennzeichnet, dass** die Ausrichtung (5a), der Abstand (5b) und/oder die Fluchtung des Prüfkopfes (5) in Bezug zur jeweiligen Oberfläche (2.1), auf der das mindestens eine Muster (1) projiziert wird, durch Vermessen der Schnittwinkel (1b), Linienlängen (1c), Linienabständen (1d), Lage der Schnittpunkte (1c) von projizierten Lichtlinien oder Punkten und /oder die Verkrümmung (1d) der Abbildung (3) des jeweiligen Musters (1) bestimmt und bei einer Korrektur der Ausrichtung (5a) und/oder der Abstand (5b) des Prüfkopfes (5) in Bezug zur jeweiligen Oberfläche (2.1) und/oder bei der Auswertung weiterer Messwerte, die für die Bestimmung von Fehlern und/oder Fehler oder Eigenschaften auf Bauteiloberflächen oder von Bauteilbeschichtungen ausgewertet werden, berücksichtigt wird/werden.

6. Verfahren nach einem der vorhergehenden Ansprüche, **dadurch gekennzeichnet, dass** eine Korrektur der Position und Ausrichtung (5a) des mindestens eines Prüfkopfes (5) in Bezug zur jeweiligen Oberfläche (2.1) mittels einer Achskinematik, insbesondere einem Roboter durchgeführt wird.

7. Verfahren nach einem der vorhergehenden Ansprüche, **dadurch gekennzeichnet, dass** bei mindestens einem handgeführten Prüfkopf (5) mittels der ermittelte Ausrichtung (5a), der Abstand (5b) und/oder Fluchtung in Bezug zur jeweiligen Oberfläche (2.1) einem Bediener angezeigt wird, in welche Richtung oder zu welcher Position der jeweilige Prüfkopf (5) bewegt werden soll, um die korrekte, manuelle Ausrichtung des Prüfkopfes (5) zu erleichtern und/oder das Erreichen eines Toleranzfensters um die gewünschte Sollabstand und/oder - ausrichtung zu bewirken.

8. Verfahren nach einem der vorhergehenden Ansprüche, **dadurch gekennzeichnet, dass** während und/oder nach einer Umformung eines Bauteils (2) die Bestimmung von Fehlern und/oder Fehler oder Eigenschaften auf Bauteiloberflächen oder von Bauteilbeschichtungen durchgeführt wird, um an den umgeformten Bereichen der Oberfläche (2.1) des jeweiligen Bauteils Fehler und/oder spezifische Eigenschaften einer Beschichtung, eines Probenmaterials und/oder Fehler mit mindestens einem Prüfkopf (5) zu bestimmen.

## Claims

1. A method for inspecting component surfaces for defects and/or determining component coating properties, particularly paintwork, with at least one probe (5), in which at least one pattern (1) of generally known geometry and dimensions is projected for testing onto at least one surface (2.1) and/or its surroundings using at least one projection light source (6), and the image (3) of the pattern (1) on the respective surface is detected using at least one optical detector unit (4) and, based on the captured image (3), a comparison is made with the original geometry of the pattern (1) and dimensions using mathematical relationships appropriate to the geometry and/or dimensions of the pattern (1) to determine the alignment (5a) of the probe (5) with the optical detector unit (4) in at least one spatial angle in terms of the respective surface normal (2a) and/or the distance (5b) of the probe (5) relative to the surface (2.1) for testing and/or the alignment of the measurement point of the probe (5) with the desired position on the component (2) and/or the alignment (5a) and/or the distance (5b) of the probe (5) determined in this way is corrected in relation to the respective surface or is/are taken into account when evaluating further measured values which are evaluated to determine any defects and/or faults or properties on component surfaces or component coatings, and
for correcting measured values for measuring principles of the probe (5), which is not nearly ideally punctual, but rather in an extended area as a measuring spot, particularly by integrating or averaging measured values for an area, and which record at least one measured value, determining the curvature of the respective surface (2.1) of the component (2) in or near the measuring spot is based on the distortion of the captured pattern (1) projected onto the respective surface (2.1) and the distortion, surface area and/or its surface normal distribution of the effective measuring spot are calculated back to be able to perform a mathematical correction of the measurement result to an effective, flat measuring spot.

2. A method according to claim 1, **characterised in that** the gloss level, colour tone and/or coating thickness are determined by using the at least one probe (5).

3. A method according to at least one of the preceding claims, **characterised in that**, as a pattern (1), at least two light lines intersect at a generally known angle, at least one circle or at least one ellipse, concentric arrangements thereof or a dot or line pattern with generally known distances between dots and/or lines are projected onto a respective surface as a pattern (1).

4. A method according to at least one of the preceding claims, **characterised in that** the projection light source (6) and the data acquisition of the detector unit (4) and/or the measuring process of the probe (5) are triggered in a temporal sequence or at least partially synchronised with a control unit, whereby particularly a pulse-like short-term activation with high illuminance and short exposure times is performed.

5. A method according to one of the preceding claims, **characterised in that** the orientation (5a), the distance (5b) and/or the alignment of the probe (5) in relation to the respective surface (2.1) on which the at least one pattern (1) is projected is determined by measuring the intersection angles (1b), line lengths (1c), line distances (1d), position of the intersections (1c) of projected light lines or points, and/or the curvature (1d) of the image (3) of the respective pattern (1) and, when correcting the alignment (5a) and/or the distance (5b) of the probe (5) in relation to the respective surface (2.1) and/or when evaluating further measured values that are evaluated to determine any defects and/or faults or properties on component surfaces or component coatings.

6. A method according to one of the preceding claims, **characterised in that** a correction of the position and alignment (5a) of the at least one probe (5) in relation to the respective surface (2.1) is performed via an axis kinematic, particularly a robot.

7. A method according to one of the preceding claims, **characterised in that**, in the case of at least one hand-held probe (5), the determined alignment (5a), distance (5b) and/or alignment in relation to the respective surface (2.1), an operator is indicated in which direction or to which position the respective probe (5) is to be moved in order to facilitate the correct manual alignment of the probe (5) and/or to achieve a tolerance window around the desired target distance and/or alignment.

8. A method according to one of the preceding claims, **characterised in that** during and/or after re-shaping a component (2), the determination of any defects and/or faults or properties on component surfaces or component coatings is carried out to determine with at least one probe (5) at the reshaped areas of the surface (2.1) of the respective component faults and/or specific properties of a coating, of a sample material and/or defects .

## Revendications

1. Procédé de contrôle de défauts sur des surfaces de composants et/ou de détermination de propriétés de revêtements de composants, en particulier de peintures, avec au moins une tête de contrôle (5), selon lequel au moins un motif (1) de géométrie et de dimensionnement connus est projeté avec au moins une source lumineuse de projection (6) sur au moins une surface à contrôler (2.1) et/ou son environnement, et l'image (3) du motif (1) sur la surface respective est détectée avec au moins une unité de détection optique (4) et, à l'aide de l'image (3) détectée, une comparaison est réalisée avec la géométrie et le dimensionnement d'origine du motif (1) et ce faisant, avec des relations mathématiques appropriées correspondant à la géométrie et/ou au dimensionnement d'origine du motif (1), l'orientation (5a) de la tête de contrôle (5) avec l'unité de détection optique (4) dans au moins un angle solide par rapport à la normale à la surface (2a) respective et/ou la distance (5b) de la tête de contrôle (5) par rapport à la surface à contrôler (2.1) et/ou l'alignement du point de mesure de la tête de contrôle (5) avec la position souhaitée sur le composant (2) est/sont établis et/ou l'orientation (5a) ainsi déterminée et/ou la distance (5b) de la tête de contrôle (5) par rapport à la surface respective est/sont corrigée(s) ou prise(s) en compte lors de l'évaluation d'autres valeurs de mesure qui sont évaluées pour déterminer des défauts et/ou des erreurs ou des propriétés sur des surfaces de composants ou de revêtements de composants et
pour une correction de la valeur de mesure pour des principes de mesure de la tête de contrôle (5) qui ne détectent pas au moins une valeur de mesure de manière ponctuelle presque idéale, mais dans une zone étendue en surface en tant que spot de mesure, en particulier par enregistrement de valeur de mesure intégrant ou faisant la moyenne pour une superficie, la courbure de la surface (2.1) respective du composant (2) dans ou près du spot de mesure est établie à l'aide de la distorsion du motif (1) détecté projeté sur la surface (2.1) respective et la distorsion, la superficie et/ou sa répartition normale à la surface du spot de mesure effectif sont recalculées pour procéder à une correction mathématique du résultat de mesure sur un spot de mesure plan effectif.

2. Procédé selon la revendication 1, **caractérisé en ce que** la brillance, la teinte et/ou l'épaisseur du revêtement sont déterminés avec la au moins une tête de contrôle (5).

3. Procédé selon au moins l'une des revendications précédentes, **caractérisé en ce que**, comme motif (1), au moins deux lignes lumineuses se coupant à un angle connu, au moins un cercle ou au moins une ellipse, des agencements concentriques de ceux-ci ou un motif de points ou de traits avec des distances connues entre les points et/ou lignes sont projetés comme motif (1) sur une surface respective.

4. Procédé selon au moins l'une des revendications précédentes, **caractérisé en ce que** la source lumineuse de projection (6) et l'enregistrement de données de l'unité de détection (4) et/ou l'opération de mesure de la tête de contrôle (5) sont déclenchés ou activés au moins partiellement de manière synchronisée avec une unité de commande dans une séquence temporelle, dans lequel une activation de courte durée de type impulsionnel est notamment réalisée avec des intensités d'éclairage élevées et des temps d'exposition courts.

5. Procédé selon l'une quelconque des revendications précédentes, **caractérisé en ce que** l'orientation (5a), la distance (5b) et/ou l'alignement de la tête de contrôle (5) par rapport à la surface (2.1) respective, sur laquelle le au moins un motif (1) est projeté, par mesure des angles d'intersection (1b), longueurs de lignes (1c), distances entre les lignes (1d), de la position des points d'intersection (1c) des lignes lumineuses ou points projetés et/ou la déformation (1d) de l'image (3) du motif (1) respectif est/sont déterminés et est/sont pris en compte lors d'une correction de l'orientation (5a) et/ou la distance (5b) de la tête de contrôle (5) par rapport à la surface (2.1) respective et/ou lors de l'évaluation d'autres valeurs de mesure qui sont évaluées pour la détermination de défauts et/ou d'erreurs ou de propriétés sur des surfaces de composants ou de revêtements de composants.

6. Procédé selon l'une quelconque des revendications précédentes, **caractérisé en ce qu'**une correction de la position et de l'orientation (5a) de la au moins une tête de contrôle (5) par rapport à la surface (2.1) respective est réalisée au moyen d'une cinématique d'axe, en particulier un robot.

7. Procédé selon l'une quelconque des revendications précédentes, **caractérisé en ce que**, dans le cas d'au moins une tête de contrôle (5) guidée manuellement, au moyen de l'orientation (5a) établie, la distance (5b) et/ou l'alignement par rapport à la surface (2.1) respective il est indiqué à un opérateur dans quelle direction ou vers quelle position la tête de contrôle (5) respective doit être déplacée, afin de faciliter l'orientation manuelle correcte de la tête de contrôle (5) et/ou de provoquer l'atteinte d'une fenêtre de tolérance de la distance et/ou de l'orientation de consigne souhaitée.

8. Procédé selon l'une quelconque des revendications précédentes, **caractérisé en ce que**, pendant et/ou après un formage d'un composant (2), la détermination de défauts et/ou d'erreurs ou de propriétés sur des surfaces de composants ou de revêtements de composants est réalisée afin de déterminer, sur les zones formées de la surface (2.1) du composant respectif, des défauts et/ou des propriétés spécifiques d'un revêtement, d'un matériau d'échantillon et/ou des erreurs avec au moins une tête de contrôle (5).
